# EUROPEAN PATENT SPECIFICATION

(11) **EP 3 184 798 B1**
(45) Date of publication and mention of the grant of the patent: **22.08.2018**
(21) Application number: 16206022.2
(22) Date of filing: 21.12.2016
(51) Int. Cl.: F02M 59/10, F16C 33/34, F16C 21/00

(54) **HIGH PRESSURE PUMP**
HOCHDRUCKPUMPE
POMPE HAUTE PRESSION

(30) Priority: 22.12.2015 GB 201522579
(43) Date of publication of application: 28.06.2017
(73) Proprietor: Delphi International Operations Luxembourg S.à r.l., 4940 Bascharage (LU)
(72) Inventor: WEST, Benjamin P.G., Whitstable, Kent CT5 2QR (GB); AKIN, Levent, Torbali / Izmir (TR)
(74) Representative: Delphi France SAS

(56) References cited:
- DE-A1-102009 015 439
- DE-A1-102013 215 128
- JP-A- H06 229 456
- JP-A- 2009 108 702
- US-A- 2 947 581

## Description

### TECHNICAL FIELD

The present invention relates to a roller of a cam follower particularly adapted to a high pressure fuel pump.

### BACKGROUND OF THE INVENTION

In cam actuated fuel pumps, a piston is slidably guided in a bore of a pumping head, the piston protruding outside the pumping head and extending toward an extremity where is arranged a cam follower maintained in contact by a spring against a rotating cam. The cam follower comprises a body having a piston side for receiving said extremity of said piston and also the final turns of the spring and, a cam side holding a roller that rolls on the outer profile of the cam. The cam and the roller rotate about parallel cam and roller axes, imparting reciprocal movement to the piston along a perpendicular pumping axis. The roller has a cylindrical shape having an outer cylindrical face extending along said roller axis between a first transverse face and a second transverse face, respectively intersecting the outer cylindrical face along a first and a second circular edge. In use, the roller contacts the cam along a contact segment parallel to the roller and cam axes. JP2009108702 discloses a HP pump as set in the preamble of claim 1.

The person skilled in the art of rollers knows that to avoid concentration of mechanical stresses at the extremities of the contact segment, the outer profile of the roller is not exactly cylindrical but is slightly curved in the vicinity of the first and of the second edges. Such profile is known as a crowning profile.

The crowning profile of the roller can be a logarithmic profile or a combination of several radius arcs. Whatever is chosen, manufacturing of said profile is very difficult and costly.

### SUMMARY OF THE INVENTION

Accordingly, it is an object of the present invention to resolve the above mentioned problems in providing a high pressure fuel pump as defined in claim 1. Advantageously, the roller is further provided with a first recess opening in the first transverse face, the material thickness between the area of the cylindrical face that is in the vicinity of the first edge and said first recess being reduced relative to an area of the cylindrical face distant from the first and from the second edges.

The roller is further provided with a second recess, opening in the second transverse face, the material thickness between the area of the cylindrical face that is in the vicinity of the second edge and said second recess being reduced relative to an area of the cylindrical face distant from the first and from the second edges.

Particularly, the first and the second recesses are symmetrical relative to a plan transverse to the roller axis and equidistant from the first and the second edge.

Also, the recess may be axisymmetric about the roller axis.

In a particular embodiment, the recess defines a cup-like space, the transverse face being limited to an annular area between the recess and the circular edge.

In an alternative to any embodiment, the recess, is filled with a filler material.

The a cam follower comprises a body in which is arranged a roller as described above and, said cam follower further comprises a centering member arranged between the body and the roller, said centering member maintaining, in use, the roller in a central position relative to the body.

Also, the sliding face of the thrust bearing member may have low friction properties as being either coated over a core member with low friction material or as being integrally made from low friction material such as PTFE.

### BRIEF DESCRIPTION OF THE DRAWINGS

The present invention is now described by way of example with reference to the accompanying drawings in which:
Figure 1 is a general view of a cam actuated fuel pump where a roller follows the outer profile of a cam.
Figure 2 is an axial section of a first example of the roller and of the cam of figure 1.
Figure 3 is a magnified view of a portion of figure 2.
Figure 4 is an alternative to the first example of figure 2.
Figure 5 is a second example of the roller.
Figure 6 is the arrangement of figure 5 with an additional member preventing axial displacements of the roller.
Figure 7 is an arrangement of a roller with thrust bearing members according to the invention.
Figure 8 is a 3D representation of a thrust bearing member.

### DESCRIPTION OF THE PREFERRED EMBODIMENTS

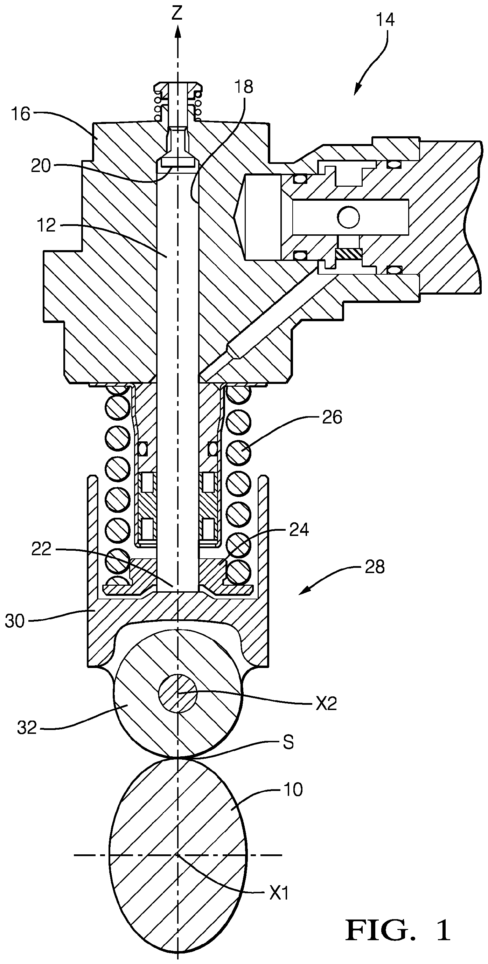

In reference to figure 1 is represented a high pressure fuel pump 14 adapted to be arranged in a fuel injection equipment of an internal combustion engine wherein a cam 10 rotates about a cam axis X1 imparting reciprocal displacement along a pumping axis Z to a piston 12 of a high pressure fuel pump 14.

The pump 14 generally comprises a pumping head 16 having a blind bore 18 in which is slidably adjusted and guided the piston 12 adapted to reciprocally translate along said pumping axis Z. The extremity of the piston 22 and the blind end of the bore define a compression chamber 20 wherein, in use, fuel at low pressure enters via an inlet and wherefrom, once pressurized it is expelled via an outlet. The piston 12 has an elongated shape and, from said extremity defining the compression chamber 20, the piston 12 extends along the pumping axis Z and protrudes outside the pumping head 16 toward a distant extremity 22 provided with a collar forming spring seat 24, a spring 26 being arranged around the piston 12 and being compressed between a face of the pumping head 16 and said spring seat 24 so that the spring 26 imparts to the piston 12 a permanent downward force (as per the non-limiting orientation of the figure). The spring seat 24 cooperates with a cam follower 28 comprising a body 30 and a roller 32 rolling on the outer profile of the cam 10.

The body 30 has a cup-like shape defining a cylindrical volume in which are arranged the final turns of the spring 26 and at the bottom of which lies the spring seat 24. Opposite to the spring side of the cup-like body, is arranged the roller 32 adapted to rotate relative to the body 30 about a roller axis X2 perpendicular to the pumping axis Z.

The force of the spring is transmitted to the roller 32 which is maintained in contact against the outer profile of the cam 10, the contact being along a contact segment S parallel to the axes X1, X2. In use, the roller 32 is also subject to a pumping force generated by the cam onto the follower.

The roller 32 is a cylinder having a cylindrical outer face 34 axially X2 extending between a first transverse face 36 and a second transverse face 38, the cylindrical face 34 respectively intersecting with the transverse faces 36, 38, in a first circular edge 40 and a second circular edge 42.

In this application, the cylindrical face 34 is indeed a cylinder of revolution meaning the outer face is generated by straight lines parallel to and equidistant from the roller axis X2. Said cylindrical face does not have a crowning profile as in the prior art. Despite this, the edges 40, 42, may be chamfered to avoid obvious mechanical damages.

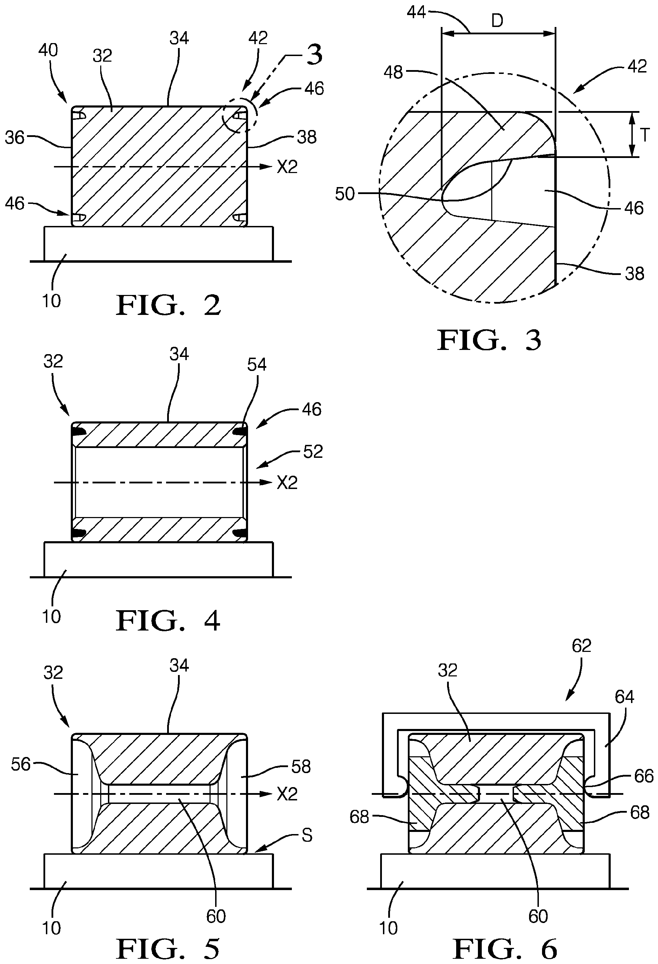

Figure 2 is an axial X2 section of a first example of the roller 32. To provide a necessary elasticity to the edge areas 44 of the cylindrical face 34, the elasticity enabling, in use, equalization of the contact pressure along the contact segment S, each of the first 36 and second 38 transverse faces is provided with an annular recess 46, or annular groove, opening in the transverse face.

Between the groove 46 and the cylindrical face 34 is defined a wall 48, better identified on the magnified figure 3, having a radial thickness T said wall 48 being able to elastically slightly deflect under pressure.

Although multiple groove profiles can be implemented to accommodate to the utilization of the roller, the depth D of the groove 46, measured relative to the transverse face 36, 38, defines the edge area 44 having said required resilient deflection property. Furthermore, the groove 46 represented and magnified on figure 3 has curved side walls. More precisely, the outer wall 50, closest to the outer cylindrical face 34 defines the wall thickness T radially measured between the groove 46 and the edge area 44, is slopped so that said wall thickness T regularly increases from the transverse face 38 to the bottom of the groove. This varying thickness T varies the elastic property of the wall 48 which will deflect more as it gets closer to the transverse face.

In an alternative to this first example represented on figure 4, the roller 34 is provided with an axial X2 through bore 52 necessary for pin bush roller type or for mass reduction.

The transverse faces are now annular faces, the grooves 46 being provided in said annular area. Furthermore, in order to avoid accumulation of debris, or to create fluid disturbances, the grooves 46 can be filled by a filler material 54 such as a molded plastic or a rubber compound which elastic properties are not comparable to and do not modify the elasticity provided to the edges of the roller.

In an alternative not represented, the groove can remain empty and the roller can be provided with a closing ring members.

A second example is now described in reference to figure 5. According to a similar principle where the wall thickness T of the edge areas 44 of the roller is decreased to provide elasticity to said edge areas, a cup-like shaped recess 56 is provided in each of the transverse faces 36, 38. Similarly to the groove of the first embodiment, the outer wall 58 of the recess is slightly sloped slowly increasing said thickness. As visible on the figure, after a certain depth D equivalent to the depth of the groove, the slope suddenly increases so that the added elasticity to the edge areas decreases and ultimately cancels.

In an alternative represented on figure 5, the bottom of the two opposed recesses 56 are joined by an axial through bore 60 enabling overall mass decrease of the roller.

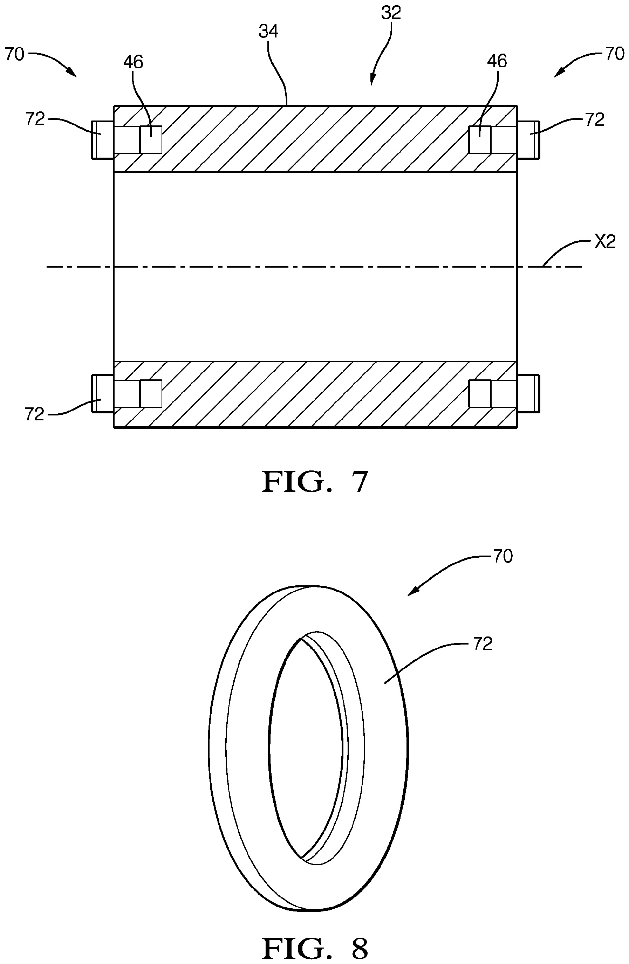

Furthermore, in another alternative represented on figure 6, the camfollower 28 may be provided with a centering member 62 preventing axial X2 displacement of the roller 32, said centering member 62 being provided with lateral arms 64 at the end of which are small protrusions 66 in contact with the transverse faces 36, 38, of the roller. To enable said contact, the recesses 56 are either filled with some filler material, as mentioned previously or, a plastic plug 68 can be inserted in the recess and, for instance, maintained in place thanks to a shaft protrusion inserted in the through bore 60. According to the invention sketched on figures 7 and 8, the roller 32 is provided with two thrust bearing member 70, one being arranged on each of the transverse side face 36, 38. Said bearing members 70 are annular an comprise an inner side oriented toward the roller and registered in the annular groove 46 and, an opposed outer side that defines a sliding face 72. For the inner side of said thrust member 70 not to prevent the edges of the roller from resiliently bending, the thrust member 70 is made of a softer material than the roller and, a preferred option is to mold said member 70 from plastic. The sliding face 72 can be provided by coating at least the outer face of the thrust member with sliding material or by integrally forming the thrust member with sliding material such as PTFE.

### LIST OF REFERENCES

- X1: cam axis
- X2: roller axis
- Z: pumping axis
- S: segment of contact
- D: depth of the groove
- T: thickness
- 10: cam
- 12: piston
- 14: pump
- 16: pumping head
- 18: bore
- 20: compression chamber
- 22: extremity of the piston
- 24: spring seat
- 26: spring
- 28: cam follower
- 30: body
- 32: roller
- 34: cylindrical face
- 36: first transverse face
- 38: second transverse face
- 40: first edge
- 42: second edge
- 44: edge area
- 46: recess - annular groove
- 48: wall
- 50: outer wall of the groove
- 52: through bore
- 54: filler material
- 56: cup-like recess
- 58: outer wall of the recess
- 60: bore
- 62: centering member
- 64: lateral arms
- 66: protrusions
- 68: plastic plug
- 70: thrust bearing member
- 72: sliding face

## Claims

1. High pressure fuel pump (14) having a pumping head (16) from which protrudes a piston (12) at an extremity (22) of which is arranged a cam follower (28) maintained, in use, in contact with a cam (10) which rotates and imparts to the piston (12) a reciprocal movement, the cam follower (28) having a body (30) in which is arranged a roller (32), said roller (32) having a cylindrical outer face (34) extending along a roller axis (X2) between a first transverse face (36) and an opposed second transverse face (38), the cylindrical face (34) intersecting the first transverse face (36) along a first edge (40) and, the second transverse face (38) along a second edge (42),
the roller (32) is further provided with a first recess (46, 56) opening in the first transverse face (36) and with a second recess (46, 56) opening in the second transverse face (38), the material thickness (T) between the area (44) of the cylindrical face that is in the vicinity of the first edge (40, 42) and said first recess (46, 56) being reduced relative to an area of the cylindrical face distant from the first (40) and from the second (42) edges and wherein,
the recess is an annular groove (46), the transverse face comprising an annular area between the recess and the circular edge, and a central circular area inside the groove (46),
**characterised in that**
the pump (14) further comprising a thrust bearing member (70) arranged on the transverse side face (36, 38) of the roller, said thrust bearing member (70) preventing direct contact between the roller (32) and the body (30) and defining a sliding face (72) for the roller and wherein
said thrust bearing member (70) is annular and registered in the annular groove (46).

2. High pressure fuel pump (14) as claimed in the preceding claim wherein the recess is axisymmetric about the roller axis (X2).

3. High pressure fuel pump (14) as claimed in any one of the preceding claims wherein the recess (56) defines a cup-like space, the transverse face being limited to an annular area between the recess (56) and the circular edge.

4. High pressure fuel pump (14) as claimed in any one of the preceding claims wherein the recess (46, 56) is filled with a filler material.

5. High pressure fuel pump (14) as claimed in any one of the preceding claims further comprising a centering member (62) arranged between the body (30) and the roller (32), said centering member (62) maintaining, in use, the roller (32) in a central position relative to the body (30).

6. High pressure pump (14) as claimed in claim 1 wherein one thrust bearing member (70) is arrange on each of the transverse side face (36, 38) of the roller.

7. High pressure pump (14) as claimed in any one of preceding claims wherein said sliding face (72) of the thrust bearing member (70) has low friction properties as being either coated over a core member with low friction material or as being integrally made from low friction material such as PTFE.

## Patentansprüche

1. Hochdruckkraftstoffpumpe (14) mit einem Pumpenkopf (16), von dem ein Kolben (12) hervorragt, an dessen Ende (22) ein Nockenfolger (28) angeordnet ist, der in Betrieb in Kontakt mit einem Nocken (10) gehalten wird, der rotiert und auf den Kolben (12) eine Hin- und Herbewegung bewirkt, wobei der Nockenfolger (28) einen Körper (30) hat, in dem eine Rolle (32) angeordnet ist, wobei die Rolle (32) eine zylindrische Außenfläche (34) hat, die sich entlang einer Rollenachse (X2) zwischen einer ersten Querfläche (36) und einer gegenüberliegenden zweiten Querfläche (38) erstreckt, wobei die zylindrische Fläche (34) die erste Querfläche (36) entlang einer ersten Kante (40) und die zweite Querfläche (38) entlang einer zweiten Kante (42) schneidet,
wobei die Rolle (32) weiter mit einer ersten Ausnehmung (46, 56) vorgesehen ist, die sich in die erste Querfläche (36) öffnet, und mit einer zweiten Ausnehmung (46 56), die sich in die zweite Querfläche (38) öffnet, wobei die Materialstärke (T) zwischen dem Bereich (44) der zylindrischen Fläche in der Nähe der ersten Kante (40, 42) und der ersten Ausnehmung (46, 56) reduziert ist relativ zu einem Bereich der zylindrischen Fläche entfernt von der ersten (40) und der zweiten (42) Kante, und wobei
die Ausnehmung eine ringförmige Nut (46) ist, wobei die Querfläche einen ringförmigen Bereich zwischen der Ausnehmung und der kreisförmigen Kante und einen zentralen kreisförmigen Bereich innerhalb der Nut (46) aufweist,
**dadurch gekennzeichnet, dass**
die Pumpe (14) weiter ein Drucklagerelement (70) aufweist, das an der Querseitenfläche (36, 38) der Rolle angeordnet ist, wobei das Drucklagerelement (70) einen direkten Kontakt zwischen der Rolle (32) und dem Körper (30) verhindert und eine Gleitfläche (72) für die Rolle definiert, und wobei
das Drucklagerelement (70) ringförmig ist und in der ringförmigen Nut (46) erfasst ist.

2. Hochdruckkraftstoffpumpe (14) gemäß dem vorhergehenden Anspruch, wobei die Ausnehmung um die Rollenachse (X2) achsensymmetrisch ist.

3. Hochdruckkraftstoffpumpe (14) gemäß einem der vorhergehenden Ansprüche, wobei die Ausnehmung (56) einen becherartigen Raum definiert, wobei die Querfläche auf einen ringförmigen Bereich zwischen der Ausnehmung (56) und der kreisförmigen Kante begrenzt ist.

4. Hochdruckkraftstoffpumpe (14) gemäß einem der vorhergehenden Ansprüche, wobei die Ausnehmung (46, 56) mit einem Füllmaterial gefüllt ist.

5. Hochdruckkraftstoffpumpe (14) gemäß einem der vorhergehenden Ansprüche, die weiter ein Zentrierelement (62) aufweist, das zwischen dem Körper (30) und der Rolle (32) angeordnet ist, wobei das Zentrierelement (62) in Betrieb die Rolle (32) in einer zentralen Position relativ zu dem Körper (30) hält.

6. Hochdruckpumpe (14) gemäß Anspruch 1, wobei ein Drucklagerelement (70) auf jeder der Querseitenflächen (36, 38) der Rolle angeordnet ist.

7. Hochdruckpumpe (14) gemäß einem der vorhergehenden Ansprüche, wobei die Gleitfläche (72) des Drucklagerelements (70) geringe Reibungseigenschaften hat, da sie entweder über ein Kernelement mit Material mit geringer Reibung beschichtet ist oder aus einem Material mit geringer Reibung, wie PTFE, integral hergestellt ist.

## Revendications

1. Pompe de carburant à haute pression (14) ayant une tête de pompage (16) de laquelle se projette un piston (12) à une extrémité (22) duquel est agencé un suiveur de came (28) maintenu, en utilisation, en contact avec une came (10) qui est en rotation et qui impose au piston (12) un mouvement de va-et-vient, le suiveur de came (28) ayant un corps (30) dans lequel est agencé un galet (32), ledit galet (32) ayant une face extérieure cylindrique (34) s'étendant le long d'un axe de galet (X2) entre une première face transversale (36) et une seconde face transversale opposée (38), la face cylindrique (34) recoupant la première face transversale (36) le long d'un premier bord (40), et la seconde face transversale (38) le long d'un second bord (42),
le galet (32) est en outre doté d'un premier évidement (46, 56) s'ouvrant dans la première face transversale (37) et d'un second évidement (46, 56) s'ouvrant dans la seconde face transversale (38), l'épaisseur (T) du matériau entre la zone (44) de la face cylindrique qui se trouve au voisinage du premier bord (40, 42) et ledit premier évidement (46, 56) étant réduite par rapport à une zone de la face cylindrique distante du premier bord (40) et du second bord (42), et dans laquelle
l'évidement est une gorge annulaire (46), la face transversale comprenant une zone annulaire entre l'évidement et le bord circulaire, et une zone circulaire centrale à l'intérieur de la gorge (46),
**caractérisée en ce que**
la pompe (14) comprend en outre un élément d'encaissement de poussée (70) agencé sur la face latérale transversale (36, 38) du galet, ledit élément d'encaissement de poussée (70) empêchant un contact direct entre le galet (32) et le corps (30) et définissant une face de coulissement (72) pour le galet, et dans laquelle
ledit élément d'encaissement de poussée (70) est annulaire et il est en concordance dans la gorge annulaire (46).

2. Pompe de carburant à haute pression (14) selon la revendication précédente, dans laquelle l'évidement est asymétrique autour de l'axe de galet (X2).

3. Pompe de carburant à haute pression (14) selon l'une quelconque des revendications précédentes, dans laquelle l'évidement (56) définit un espace semblable à une coupelle, la face transversale étant limitée à une zone annulaire entre l'évidement (56) et le bord circulaire.

4. Pompe de carburant à haute pression (14) selon l'une quelconque des revendications précédentes, dans laquelle l'évidement (46, 56) est rempli avec un matériau de remplissage.

5. Pompe de carburant à haute pression (14) selon l'une quelconque des revendications précédentes, comprenant en outre un élément de centrage (62) agencé entre le corps (30) et le galet (32), ledit élément de centrage (62) maintenant, en utilisation, le galet (32) dans une position centrale par rapport au corps (30).

6. Pompe à haute pression (14) selon la revendication 1, dans laquelle un élément d'encaissement de poussée (70) est agencé sur chacune des faces latérales transversales (36, 38) du galet.

7. Pompe à haute pression (14) selon l'une quelconque des revendications précédentes, dans laquelle ladite face de coulissement (72) de l'élément d'encaissement de poussée (70) présente des propriétés de faible friction, soit du fait qu'il est revêtu, sur un élément formant coeur, d'un matériau à faible friction, soit du fait qu'il est intégralement réalisé en un matériau à faible friction, comme du PTFE.
